# EUROPEAN PATENT SPECIFICATION

(11) **EP 4 276 410 B1**
(45) Date of publication and mention of the grant of the patent: **09.10.2024**
(21) Application number: 23170847.0
(22) Date of filing: 28.04.2023
(51) Int. Cl.: G01C 19/5607, G01P 15/08, G01P 15/097

(54) **VIBRATING BEAM ACCELEROMETER**
BESCHLEUNIGUNGSMESSER MIT VIBRIERENDEM BALKEN
ACCÉLÉROMÈTRE À LAME VIBRANTE

(30) Priority: 13.05.2022 US 202263364692 P; 25.05.2022 US 202263365301 P; 23.12.2022 US 202218146114
(43) Date of publication of application: 15.11.2023
(73) Proprietor: Honeywell International Inc., Charlotte, NC 28202 (US)
(72) Inventor: MILNE, James Christopher, Charlotte, 28202 (US); BECKA, Stephen F., Charlotte, 28202 (US)
(74) Representative: Haseltine Lake Kempner LLP

(56) References cited:
- EP-A1- 2 372 375
- EP-A1- 3 021 125
- EP-A1- 3 517 979
- US-A1- 2001 049 193
- HAN CHAO ET AL: "High-Stability Quartz Resonant Accelerometer With Micro-Leverages", JOURNAL OF MICROELECTROMECHANICAL SYSTEMS, IEEE SERVICE CENTER, US, vol. 30, no. 2, 12 January 2021 (2021-01-12), pages 184 - 192, XP011847857, ISSN: 1057-7157, [retrieved on 20210402], DOI: 10.1109/JMEMS.2020.3036121

## Description

This application relates to U.S. Provisional Patent Application 63/364,692, filed May 13, 2022, and entitled "VIBRATING BEAM ACCELEROMETER," and U.S. Provisional Patent Application 63/365,301, filed 25 May 2022, and entitled "LASER ETCHING QUARTZ RESONATORS,".

### TECHNICAL FIELD

The present disclosure relates to vibrating beam accelerometers, also referred to as resonating beam accelerometers.

### BACKGROUND

Accelerometers function by detecting the displacement of a proof mass under inertial forces. One technique of detecting the force and acceleration is to measure the displacement of the mass relative to a frame. Another technique is to measure the force induced in resonators as they counteract inertial forces of the proof mass. The acceleration may, for example, be determined by measuring the change in the frequencies of the resonators due to the change in load generated by the Newtonian force of a proof mass experiencing acceleration.

US 2001/049193 A1 discloses a method of forming a thin film metallization layer having a predetermined residual stress and a predetermined sheet resistance and force measuring devices formed using the methods.

EP 3 021 125 A1 discloses an in-plane vibrating beam accelerometer.

HAN CHAO ET AL: "High-Stability Quartz Resonant Accelerometer With Micro-Leverages", JOURNAL OF MICROELECTROMECHANICAL SYSTEMS, IEEE SERVICE CENTER, US, vol. 30, no. 2, 12 January 2021 (2021-01-12), pages 184-192 discloses a differential resonant accelerometer that is monolithically micromachined from a piece of crystal quartz. The overall structure of quartz accelerometer is centrally symmetrical, which comprises two double-ended tuning forks, two link beams, two micro-leverages, a proof mass, and a quartz frame.

EP 2 372 375 A1 discloses a method of making a resonating beam accelerometer. In an example process, a proof mass device and resonators are created from a quartz material.

EP 3 517 979 A1 discloses a proof mass assembly comprising a first and a second resonator, each resonator comprising a first and a second bond pad, and a pair of elongated tines, wherein the first and the second bond pads are positioned at opposite ends of the elongated tines.

### SUMMARY

The present invention is defined by the independent claims 1 and 8, to which reference should now be made. Advantageous embodiments are set out in the dependent claims. Techniques of the present disclosure describe proof mass assemblies comprising a single material providing reduced and/or zero differences of coefficient of thermal expansion (CTE) between the components of the proof mass assembly, providing improved motion sensing accuracy and sensor robustness.

The details of one or more examples are set forth in the accompanying drawings and the description below. Other features, objects, and advantages will be apparent from the description and drawings, and from the claims.

### BRIEF DESCRIPTION OF THE FIGURES

FIG. 1A is a conceptual diagram illustrating a top view of an example proof mass assembly.
FIG. 1B is a conceptual diagram illustrating a cross-sectional side view of the example proof mass assembly of FIG. 1A along line AA-AA.
FIG. 2 is an enlarged schematic view of an example resonator.
FIGS. 3 is an enlarged schematic view of an example proof mass assembly of an example proof mass assembly including strain isolators.
FIG. 4 is a block diagram illustrating an accelerometer system.
FIG. 5 is a flow diagram illustrating an example technique of making a proof mass assembly.

### DETAILED DESCRIPTION

Navigation systems and positioning systems rely on the accuracy of accelerometers to perform critical operations in various environments. Due to the different types of materials used in producing such accelerometers, thermally induced strains (e.g., forces) may be imposed on the various components due to changing temperatures. These changes may cause errors and reduce the overall accuracy, precision, or sensitivity of the accelerometer. One source of thermally induced errors in vibrating beam accelerometers (VBAs) relates to the bonding mechanism between resonators of the VBA and the proof mass and proof mass support of the VBA. Such components are conventionally joined using an adhesive such as an epoxy material, which has a higher rate of thermal expansion, e.g., a higher coefficient of thermal expansion (CTE), compared to the proof mass, the proof mass support, or the resonators. This differential volume change in response to changes in temperature can induce forces on the resonators, leading to inaccurate measurements.

In some examples, the present disclosure describes VBAs comprising components formed from the same material. In some examples, the components may be made from the same material as assembled and/or attached without the use of other materials, e.g., adhesives, epoxies, or the like. In other examples, the components may be formed monolithically from the same material part and/or substrate. According to the invention, the proof mass assembly includes a monolithic crystalline quartz substrate. In some examples, complex three-dimensional (3D) structures and/or features, e.g., shaped flexures, resonator beams, strain isolators, thermal isolators, dampening plates, or the like, may be monolithically formed in a single substrate, such as crystalline quartz, via laser etching, such as a selective laser etch (also referred to as a subtractive 3D laser printing).

In some examples, a selective laser etch may selectively modify a portion of a material. In some examples, the modified portion of the material may be on a surface of the material, within the bulk of the material at a depth and/or distance from a surface of the material, or both. In some examples, the laser selective etch may selectively modify the structure of the portion of the material, e.g., converting from a first crystalline structure to a second, different, crystalline structure or to an amorphous or partially amorphous structure. In some examples, the laser selective etch may selectively modify a material property of the portion of the material, e.g., an index of refraction, a density, a thermal conductivity, a CTE, a harness, a dielectric constant, a Youngs modulus, a shear modulus, a bulk modulus, an elastic coefficient, a melting point, an apparent elastic limit, a molecular weight, or the like. In some examples, the laser selective etch may selectively modify the portion of the material in preparation for removal of the material, e.g., via a subsequent wet etch process. For example, the laser selective etch may function as a 3D lithographic laser printing where the material, e.g., a crystalline quartz substrate, functions as a positive-tone resist. In some examples, the laser selective etch may directly etch a portion of the material, e.g., via ablating, vaporizing, or the like, the portion of the material. In some examples, the laser selective etch may comprise picosecond and/or femtosecond laser radiation, e.g., one or more picosecond and/or femtosecond laser pulses configured to irradiate the portion of the material.

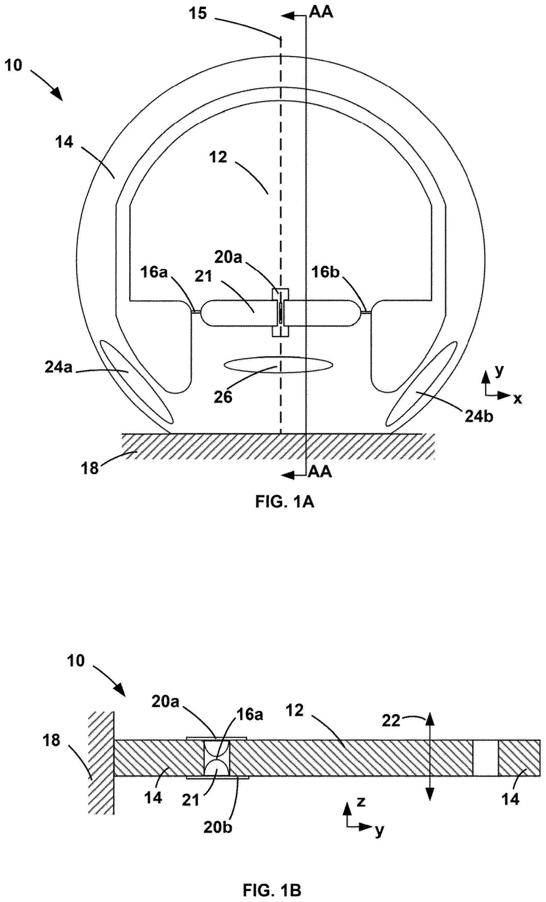

FIGS. 1A and 1B are conceptual diagrams illustrating a top view (FIG. 1A) and a cross-sectional side view (FIG. 1B, taken along line AA-AA of FIG. 1A) of an example proof mass assembly 10 that includes a proof mass 12 connected to proof mass support 14 by flexures 16a and 16b. Proof mass assembly 10 also includes at least two resonators 20a and 20b bridging a gap 21 between proof mass 12 and proof mass support 14. Resonators 20a and 20b (collectively "resonators 20") each have opposing ends connected to, integral with, mounted to, and/or attached to proof mass 12 and proof mass support 14, respectively. Proof mass assembly 10 may be a proof mass assembly of a VBA.

VBAs operate by monitoring the differential change in frequencies between resonators 20a and 20b. Each of resonators 20a and 20b, also referred to as double ended tuning forks (DETFs), will vibrate at a certain frequency depending on the resonator tine geometry, and material properties such as density and elastic modulus. The resonator is configured to change frequency as a function of the axial load or force (e.g., compression or tension exerted in the y-axis direction of FIGS. 1A and 1B) exerted on the respective resonator 20a or 20b. During operation, proof mass support 14 may be directly or indirectly mounted to an object 18 (e.g., aircraft, missile, orientation module, etc.) that undergoes acceleration or angle change and causes proof mass 12 to experience inertial displacements in a direction perpendicular to the plane defined by flexures 16a and 16b (e.g., in the direction of arrows 22 or in the direction of the z-axis of FIG. 1B). The deflection of proof mass 12 induces axial tension on one of resonators 20a and 20b and axial compression on the other depending on the direction of the force. The different relative forces on resonators 20a and 20b with alter the respective vibration frequencies of the resonators 20a and 20b. By measuring these changes, the direction and magnitude of the force exerted on object 18, and thus the acceleration, can be measured.

Proof mass assembly 10 may include strain isolators 24a and 24b, and one or more thermal isolators 26. In some examples, strain isolators 24a and 24b and/or thermal isolator 26 may be connected to proof mass support 14 and configured to reduce a force (or strain), e.g., compression and or tension force, of at least one of proof mass 12, proof mass support 14, flexures 16a or 16b, or resonator 20a or 20b, e.g., upon application of a force (or stress) to the proof mass assembly, e.g., from an environmental change such as a temperature/humidity change and materials having different CTEs. For example, proof mass assembly 10 may be located in an environment subject to significant temperature and/or humidity changes, e.g., in a vehicle, aircraft, watercraft, spacecraft, or the like, and thermal isolator 26 may be configured deform, displace, or otherwise isolate proof mass assembly 10 from forces due to expansion or contraction of materials of proof mass assembly in response to changing temperature and/or humidity. In some examples, strain isolators 24a and 24b and/or thermal isolator 26 may be made of the same material, or otherwise have a CTE substantially the same as proof mass assembly 10 and/or one or more components of proof mass assembly 10, e.g., proof mass 12, flexures 16a or 16b, proof mass support 14, and/or resonators 20a or 20b. In some examples, strain isolators 24a and 24b and/or thermal isolator 26 may be monolithically formed within and/or from the same material, substrate, or the like, along with proof mass 12, flexures 16a and 16b, proof mass support 14, and resonators 20a or 20b. In other examples, strain isolators 24a and 24b and/or thermal isolator 26 may be separately formed from other components of proof mass assembly 10 and subsequently connected to proof mass support 14 without the use of a bonding adhesive such as an epoxy, e.g., via a laser weld.

Proof mass assembly 10 may include additional components that are used to induce an oscillating frequency across resonators 20a and 20b such as one or more electrical traces, piezoelectric drivers, electrodes, and the like, or other components that may be used with the final construction of the accelerometer such as stators, permanent magnets, capacitance pick-off plates, dampening plates, force-rebalance coils, and the like, which are not shown in FIGS. 1A and 1B. Such components may be incorporated on proof mass assembly 10 or the final accelerometer.

As shown in FIG. 1A, proof mass support 14 may be a planar ring structure that substantially surrounds proof mass 12 and substantially maintains flexures 16a and 16b and proof mass 12 in a common plane (e.g., the x-y plane of FIGS. 1A and 1B). Although proof mass support 14 as shown in FIG. 1A is a circular shape, it is contemplated that proof mass support 14 may be any shape (e.g., square, rectangular, oval, or the like) and may or may not surround proof mass 12.

Proof mass 12, proof mass support 14, and flexures 16 may be formed using any suitable material. In some examples, proof mass 12, proof mass support 14, and flexures 16 may be made of quartz, crystalline quartz, a silicon-based material, , or any suitable material useable with a laser-aided etching process, such as laser selective etching, e.g., having a transparency useable with a laser etch configured to irradiate the material on a surface of the material or at a depth within the material. According to the invention, proof mass 12, proof mass support 14, and flexures 16 are made of monolithic crystalline quartz, wherein the flexure, the first resonator and the second resonator are formed via a laser selective etch. In some examples, proof mass 12 and proof mass support 14 may be etched within and/or from the same substrate and/or blank. In other examples, proof mass 12, proof mass support 14, and flexures 16 may be made of different materials having substantially the same CTE and assembled and/or attached, e.g., via a laser weld. In some examples, such a laser weld may comprise a laser selective etch, e.g., fusing a portion of two components to attach the components to each other via irradiation by a picosecond and/or femtosecond laser.

In some examples, resonators 20a and 20b are made of a piezoelectric material, such as quartz (SiO₂), Berlinite (AlPO₄), gallium orthophosphate (GaPO₄), thermaline, barium titanate (BaTiO₃), lead zirconate titanate (PZT), zinc oxide (ZnO), or aluminum nitride (AlN), or the like. In some examples, resonators 20a and 20b may be made of a silicon-based material.

In some examples, resonators 20a and 20b may be monolithically formed with proof mass 12, proof mass support 14, and flexures 16, e.g., within and/or from the same substrate and/or blank, such as a crystalline quartz substrate. In some examples, resonators 20a and 20b may comprise the same material as proof mass 12, proof mass support 14, and flexures 16, and attached and/or assembled with proof mass 12, proof mass support 14, and flexures 16, e.g., via laser welding.

In other examples, resonators 20a and 20b may comprise different materials from each other and/or proof mass 12, proof mass support 14, and flexures 16, and may be attached and/or assembled with proof mass 12, proof mass support 14, and flexures 16. For example, resonators 20a and 20b may comprise a material different from proof mass 12, proof mass support 14, and flexures 16, and having substantially the same CTE proof mass 12, proof mass support 14, and flexures 16.

In some examples, whether monolithically formed or assembled/attached without the use of other materials, e.g., adhesives, epoxies, or the like, resonators 20a and 20b, proof mass 12, proof mass support 14, and flexures 16 may have substantially the same CTE. In some examples, proof mass assembly 10 may comprise additional components (not shown) having substantially the same CTE as with resonators 20a and 20b, proof mass 12, proof mass support 14, and flexures 16, e.g., strain isolators, thermal isolators, dampening pates, or the like, and attached and/or assembled without the use of other materials, e.g., adhesives, epoxies, or the like. In some examples, such additional components may be made of the same material as resonators 20a and 20b, proof mass 12, proof mass support 14, and flexures 16, and in some examples such components may be monolithically formed from the same material substrate and/or blank along with resonators 20a and 20b, proof mass 12, proof mass support 14, and flexures 16.

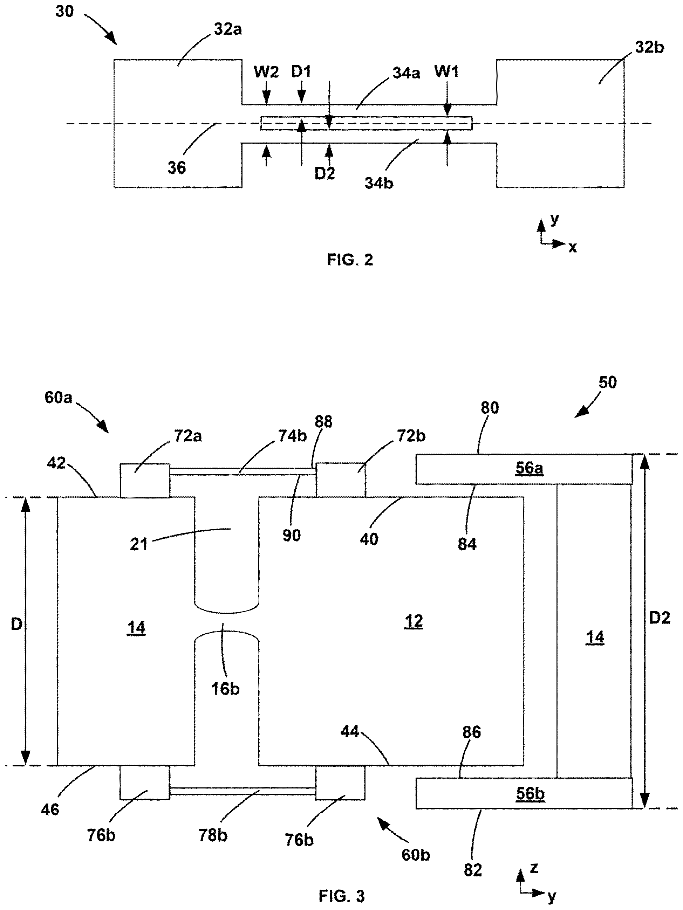

FIG. 2 is an enlarged schematic view of an example resonator 30 that includes a first and second pads 32a and 32b positioned at opposite ends of two elongated tines 34a and 34b that extend parallel to each other along a longitudinal axis 36 and separated by a width W1 for at least a portion of their length along longitudinal axis 36. In the example, shown, elongated tine 34a may have a width W3 and elongated tine 34b may have a width W4, and at least a portion of the length of resonator 30 along longitudinal axis 36 has a width W2. As described above, resonator 30 may be referred to as a DETF. In some examples, resonator 30 may be substantially the same as resonator 20a and/or resonator 20b of FIG. 1.

First and second pads 32a and 32b of resonator 30 may be monolithically etched within proof mass 12 and/or proof mass support 14, respectively. In some examples, first and second pads 32a and 32b of resonator 30 may be attached and/or laser welded to proof mass 12 and/or proof mass support 14, respectively, without using a bonding adhesive such as an epoxy.

FIG. 3 is conceptual diagrams illustrating a cross-sectional side view of an example proof mass assembly 50 that includes a proof mass 12 connected to proof mass support 14 by flexures 16a and 16b. Proof mass assembly 50 may be substantially similar to proof mass assembly 10 except that resonators 60a and 60b include first and second pads 72a, 72b and 76a, 76b, respectively. The cross-sectional view of FIG. 3 is taken along line AA-AA similar to as in FIG. 1A. Resonators 60a and 60b (collectively "resonators 60") may be substantially similar to resonator 30 of FIG. 2, e.g., pads 72a and 76a may be substantially similar to pad 32a, pads 72b and 76b may be substantially similar to pad 32b, and times 74a (not shown), 74b, 78a (not shown), and 78b may be substantially similar to tines 34a and 34b, respectively as shown. In the examples shown, proof mass assembly 50 also includes dampening plates 56a and 56b connected to proof mass support 14. Resonators 60a and 60b of proof mass assembly 50 may bridge gap 21 between proof mass 12 and proof mass support 14. Resonators 60a and 60b each have opposing ends connected to, integral with, mounted to, and/or attached to proof mass 12 and proof mass support 14, respectively. Proof mass assembly 50 may be a proof mass assembly of a VBA.

In the example shown, resonator 60a is connected to surface 40 of proof mass 12 and surface 42 of proof mass support 14. Surfaces 40 and 42 may be major surfaces of proof mass 12 and proof mass support 14, respectively, e.g., top-side surfaces. Resonator 60b is connected to surface 44 of proof mass 12 and surface 46 of proof mass support 14. Surfaces 44 and 46 may be major surfaces of proof mass 12 and proof mass support 14, respectively, e.g., bottom-side surfaces. In the example shown, top surface 40 of proof mass 12 is opposite bottom surface 44, and top surface 42 of proof mass support 14 is opposite bottom surface 44. In the example shown, pads 72a, 72b and pads 76a, 76b are configured to connect and offset tines 74a, 74b, 78a, and 78b, from proof mass support 14 and proof mass assembly 12, e.g., in the z-direction, e.g., the depth direction. For example, resonators 60a and 60b are not coplanar with each other, proof mass support 14 and proof mass assembly 12, e.g., resonators 60a and 60b are offset in the depth direction, e.g., the z-direction, from the thickness D (e.g., length D in the depth direction) of proof mass 12 and proof mass support 14. In the example shown, proof mass 12 and proof mass support 14 have the same thickness D. In other examples, proof mass 12 and proof mass support 14 may have different thicknesses, which may differ from the thicknesses of resonators 60a and 60b.

In some examples, resonators 60 may be offset relative to each other, e.g., from a center line of proof mass assembly 50 in the x-direction (not shown in FIG. 3). For example, and in reference to FIG. 1A, although resonators 20 are illustrated as being located at center line 15 of proof mass assembly 10, e.g., along the x-direction in FIG. 1A, in some examples resonator 20a is offset and/or displaced relative to resonator 20b along the x-direction. For example, resonator 20a may be connected to "top" surfaces of proof mass 12 and proof mass support 14 and offset in the x-direction relative to resonator 20b connected to the opposing "bottom" surfaces of proof mass 12 and proof mass support 14, e.g., resonator 20a may be located left of center line 15 and resonator 20b may be located right of center line 15. Similarly, resonator 60a may be offset and/or displaced relative to resonator 60b along the x-direction of proof mass assembly 50.

In some examples, proof mass 12 is configured to rotate relative to proof mass support 14 via flexures 16a and/or 16b, e.g., in the y-z plane. In the example shown, proof mass assembly 50 includes top dampening plate 56a and bottom dampening plate 56b, collectively "dampening plates 56." Dampening plates 56 are connected to proof mass support 14 and may be configured to limit a range of rotation, motion, and/or displacement of proof mass 12.

In some examples, resonators 60a and 60b are configured to have opposite compressive/tensile forces upon rotation of proof mass 12 in a particular direction in the y-z plane. For example, resonator 60a is connected to top surface 40 of proof mass 12 and top surface 42 of proof mass support 14 and is configured to have a tensile force upon "downward" rotation of proof mass 12, e.g., in the negative z-direction in the example shown. Resonator 60b is connected to bottom surface 44 of proof mass 12 and bottom surface 46 of proof mass support 14 and is configured to have a compressive force upon such downward rotation of proof mass 12. Upon upward rotation of proof mass 12, e.g., in the positive z-direction in the example shown, resonator 60a is configured to have a compressive force and resonator 60b is configured to have a tensile force. The compressive and tensile forces of resonators 60a and 60b change the resonant frequency of tines 74a, 74b and 78a, 78b, from which a VBA including proof mass assembly 50 may determine a direction (e.g., up or down in the example shown) and an acceleration and/or motion of proof mass 12.

In some examples, proof mass assembly 50 may include one or more strain isolators (not shown) substantially similar to strain isolators 24a and 24b and one or more thermal isolators (not shown) substantially similar to thermal isolator 26 of FIG. 1A.

According to the invention, proof mass assembly 50 is a monolithic proof mass assembly formed from a crystalline quartz substrate. In some examples, at least a portion of, or all of, proof mass assembly 50 may be formed via a laser etch, such as a laser selective etch. For example, a laser selective etch may irradiate a substantially small volume and precisely locate such volume anywhere within a monolithic substrate, such as a monolithic quartz substrate. The laser selective etch may be focused at varying depths, e.g., along the z-direction in the example shown in FIG. 3. For example, resonators 60a and 60b may be formed via laser selective etch, including pads 72a, 72b, 76a, 76b, and tines 74a, 74b, 78a, 78b, including gap and/or spacing W1.

In some examples, proof mass assembly 50 may be monolithically formed via laser selective etching, e.g., 3D etching, to form proof mass 12, proof mass support 14, flexures 16a, 16b, resonators 60a, 60b, including depth etching between tines 74a, 74b and surfaces 40, 42 and tines 78a, 78b and surfaces 44, 46, and dampening plates 56, strain isolators 24a, 24b, thermal isolators 26, and/or any other components of proof mass 50. In other words, the components of proof mass assembly may be integral to each other, e.g., integrally connected. In some examples, the components of proof mass assembly, e.g., proof mass 12, proof mass support 14, flexures 16a, 16b, resonators 60a, 60b, dampening plates 56, strain isolators 24a, 24b, thermal isolators 26, and the like, may have substantially the same CTE, e.g., by virtue of being the same material and formed within and/or from the same substrate.

In other examples, proof mass assembly 50 may be formed via attachment of one or more components made of the same material having substantially the same CTE and without bonding adhesives such as an epoxy. For example, resonators 60a and 60b may be connected to proof mass 12 and proof mass support 14 via a laser weld. In some examples, the laser weld may be configured to fuse at least a portion of resonators 60a and 60b to proof mass 12 and proof mass support 14.

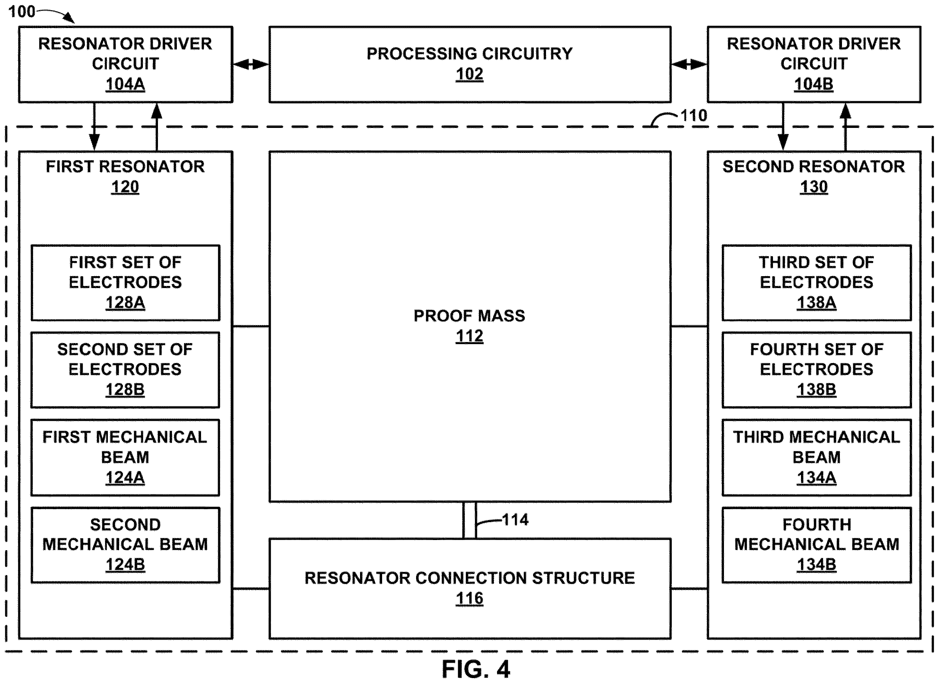

FIG. 4 is a block diagram illustrating an accelerometer system 100, in accordance with one or more techniques of this disclosure. As illustrated in FIG. 4, accelerometer system 100 includes processing circuitry 102, resonator driver circuits 104A-104B (collectively, "resonator driver circuits 104"), and proof mass assembly 110. Proof mass assembly 110 may be substantially similar to proof mass assembly 10 and/or 50 described above. Proof mass assembly 110 includes proof mass 112, resonator connection structure 116, first resonator 120, and second resonator 130. Proof mass 112 may be substantially similar to proof mass 12, resonator connection structure 116 may be substantially similar to proof mass support 14, and resonators 120, 130 may be substantially similar to resonators 20a, 20b and/or resonators 60a, 60b, described above.

First resonator 120 includes first mechanical beam 124A and second mechanical beam 124B (collectively, "mechanical beams 124"), and first set of electrodes 128A and second set of electrodes 128B (collectively, "electrodes 128"). Second resonator 130 includes third mechanical beam 134A and fourth mechanical beam 134B (collectively, "mechanical beams 134"), and third set of electrodes 138A and fourth set of electrodes 138B (collectively, "electrodes 138").

Accelerometer system 100 may, in some examples, be configured to determine an acceleration associated with an object (not illustrated in FIG. 4) based on a measured vibration frequency of one or both of first resonator 120 and second resonator 130 which are connected to proof mass 112. In some examples, the vibration of first resonator 120 and second resonator 130 is induced by drive signals emitted by resonator driver circuit 104A and resonator driver circuit 104B, respectively. In turn, first resonator 120 may output a first set of sense signals and second resonator 130 may output a second set of sense signals and processing circuitry 102 may determine an acceleration of the object based on the first set of sense signals and the second set of sense signals.

Processing circuitry 102, in some examples, may include one or more processors that are configured to implement functionality and/or process instructions for execution within accelerometer system 100. For example, processing circuitry 102 may be capable of processing instructions stored in a storage device. Processing circuitry 102 may include, for example, microprocessors, digital signal processors (DSPs), application specific integrated circuits (ASICs), field-programmable gate arrays (FPGAs), or equivalent discrete or integrated logic circuitry, or a combination of any of the foregoing devices or circuitry. Accordingly, processing circuitry 102 may include any suitable structure, whether in hardware, software, firmware, or any combination thereof, to perform the functions ascribed herein to processing circuitry 102.

A memory (not illustrated in FIG. 4) may be configured to store information within accelerometer system 100 during operation. The memory may include a computer-readable storage medium or computer-readable storage device. In some examples, the memory includes one or more of a short-term memory or a long-term memory. The memory may include, for example, random access memories (RAM), dynamic random access memories (DRAM), static random access memories (SRAM), magnetic discs, optical discs, flash memories, or forms of electrically programmable memories (EPROM) or electrically erasable and programmable memories (EEPROM). In some examples, the memory is used to store program instructions for execution by processing circuitry 102.

In some examples, resonator driver circuit 104A may be electrically coupled to first resonator 120. Resonator driver circuit 104A may output a first set of drive signals to first resonator 120, causing first resonator 120 to vibrate at a resonant frequency. Additionally, in some examples, resonator driver circuit 104A may receive a first set of sense signals from first resonator 120, where the first set of sense signals may be indicative of a mechanical vibration frequency of first resonator 120. Resonator driver circuit 104A may output the first set of sense signals to processing circuitry 102 for analysis. In some examples, the first set of sense signals may represent a stream of data such that processing circuitry 102 may determine the mechanical vibration frequency of first resonator 120 in real-time or near real-time.

In some examples, resonator driver circuit 104B may be electrically coupled to second resonator 130. Resonator driver circuit 104B may output a second set of drive signals to second resonator 130, causing second resonator 130 to vibrate at a resonant frequency. Additionally, in some examples, resonator driver circuit 104B may receive a second set of sense signals from second resonator 130, where the second set of sense signals may be indicative of a mechanical vibration frequency of first resonator 130. Resonator driver circuit 104B may output the second set of sense signals to processing circuitry 102 for analysis. In some examples, the second set of sense signals may represent a stream of data such that processing circuitry 102 may determine the mechanical vibration frequency of second resonator 130 in real-time or near real-time.

Proof mass assembly 110 may secure proof mass 112 to resonator connection structure 116 using first resonator 120 and second resonator 130. For example, proof mass 112 may be secured to resonator connection structure 116 in a first direction with hinge flexure 114. Hinge flexure 114 may be substantially similar to flexures 16a, 16b described above. Proof mass 112 may be secured to resonator connection structure 116 in a second direction with first resonator 120 and second resonator 130. Proof mass 112 may be configured to pivot about hinge flexure 114, applying force to first resonator 120 and second resonator 130 in the second direction. For example, if proof mass 112 pivots towards first resonator 120, proof mass 112 applies a compression force to first resonator 120 and applies a tension force to second resonator 130. If proof mass 112 pivots towards second resonator 130, proof mass 112 applies a tension force to first resonator 120 and applies a compression force to second resonator 130.

An acceleration of proof mass assembly 110 may affect a degree to which proof mass 112 pivots about hinge flexure 114. As such, the acceleration of proof mass assembly 110 may determine an amount of force applied to first resonator 120 and an amount of force applied to second resonator 130. An amount of force (e.g., compression force or tension force) applied to resonators 120, 130 may be correlated with an acceleration vector of proof amass assembly 110, where the acceleration vector is normal to hinge flexure 114.

In some examples, the amount of force applied to first resonator 120 may be correlated with a resonant frequency in which first resonator 120 vibrates in response to resonator driver circuit 104A outputting the first set of drive signals to first resonator 120. For example, first resonator 120 may include mechanical beams 124. In this way, first resonator 120 may represent a DETF structure, where each mechanical beam of mechanical beams 124 vibrate at the resonant frequency in response to receiving the first set of drive signals. Electrodes 128 may generate and/or receive electrical signals indicative of a mechanical vibration frequency of first mechanical beam 124A and a mechanical vibration frequency of second mechanical beam 124B. For example, the first set of electrodes 128A may generate and/or receive a first electrical signal and the second set of electrodes 128B may generate and/or receive a second electrical signal. In some examples, the first electrical signal may be in response to sensing a mechanical vibration frequency of the mechanical beams 124 (e.g., both mechanical beams 124A and 124B) via the first set of electrodes 128A, e.g., a resonant frequency of mechanical beams 124. Resonant driver circuit 104A may receive the first electrical signal and may amplify the first electrical signal to generate the second electrical signal. The second electrical signal may be applied to mechanical beams 124 (e.g., both mechanical beams 124A and 124B) via second set of electrodes 128B, e.g., to drive mechanical beams 124 to vibrate at the resonant frequency. Electrodes 128 may output the first electrical signal and the second electrical signal to processing circuitry 102.

In some examples, the mechanical vibration frequency of the first mechanical beam 124A and the second mechanical beam 124B are substantially the same when resonator driver circuit 104A outputs the first set of drive signals to first resonator 120. For example, the mechanical vibration frequency of first mechanical beam 124A and the mechanical vibration frequency of second mechanical beam 124B may both represent the resonant frequency of first resonator 120, where the resonant frequency is correlated with an amount of force applied to first resonator 120 by proof mass 112. The amount of force that proof mass 112 applies to first resonator 120 may be correlated with an acceleration of proof mass assembly 110 relative to a long axis of resonator connection structure 116. As such, processing circuitry 102 may calculate the acceleration of proof mass 112 relative to the long axis of resonator connection structure 116 based on the detected mechanical vibration frequency of mechanical beams 124.

In some examples, the amount of force applied to second resonator 130 may be correlated with a resonant frequency in which second resonator 130 vibrates in response to resonator driver circuit 104B outputting the second set of drive signals to second resonator 130. For example, second resonator 130 may include mechanical beams 134. In this way, second resonator 130 may represent a DETF structure, where each mechanical beam of mechanical beams 134 vibrate at the resonant frequency in response to receiving the second set of drive signals. Electrodes 138 may generate and/or receive electrical signals indicative of a mechanical vibration frequency of third mechanical beam 134A and a mechanical vibration frequency of fourth mechanical beam 134B. For example, the third set of electrodes 138A may generate and/or receive a third electrical signal and the fourth set of electrodes 138B may generate a fourth electrical signal. In some examples, the third electrical signal may be in response to sensing a mechanical vibration frequency of the mechanical beams 134 (e.g., both mechanical beams 134A and 134B) via the third set of electrodes 138A, e.g., a resonant frequency of mechanical beams 134. Resonant driver circuit 104B may receive the third electrical signal and may amplify the third electrical signal to generate the fourth electrical signal. The fourth electrical signal may be applied to mechanical beams 134 (e.g., both mechanical beams 134A and 134B) via fourth set of electrodes 138B, e.g., to drive mechanical beams 134 to vibrate at the resonant frequency. Electrodes 138 may output the third electrical signal and the fourth electrical signal to processing circuitry 102.

In some examples, the mechanical vibration frequency of the third mechanical beam 134A and the fourth mechanical beam 134B are substantially the same when resonator driver circuit 104B outputs the second set of drive signals to second resonator 130. For example, the mechanical vibration frequency of third mechanical beam 134A and the mechanical vibration frequency of fourth mechanical beam 134B may both represent the resonant frequency of second resonator 130, where the resonant frequency is correlated with an amount of force applied to second resonator 130 by proof mass 112. The amount of force that proof mass 112 applies to second resonator 130 may be correlated with an acceleration of proof mass assembly 110 relative to a long axis of resonator connection structure 116. As such, processing circuitry 102 may calculate the acceleration of proof mass 112 relative to the long axis of resonator connection structure 116 based on the detected mechanical vibration frequency of mechanical beams 134.

In some cases, processing circuitry 102 may calculate an acceleration of proof mass assembly 110 relative to the long axis of resonator connection structure 116 based on a difference between the detected mechanical vibration frequency of mechanical beams 124 and the detected mechanical vibration frequency of mechanical beams 134. When proof mass assembly 110 accelerates in a first direction along the long axis of resonator connection structure 116, proof mass 112 pivots towards first resonator 120, causing proof mass 112 to apply a compression force to first resonator 120 and apply a tension force to second resonator 130. When proof mass assembly 110 accelerates in a second direction along the long axis of resonator connection structure 116, proof mass 112 pivots towards second resonator 130, causing proof mass 112 to apply a tension force to first resonator 120 and apply a compression force to second resonator 130. A resonant frequency of a resonator which is applied a first compression force may be greater than a resonant frequency of the resonator which is applied a second compression force, when the first compression force is less than the second compression force. A resonant frequency of a resonator which is applied a first tension force may be greater than a resonant frequency of the resonator which is applied a second tension force, when the first tension force is greater than the second tension force.

Although accelerometer system 100 is illustrated as including resonator connection structure 116, in some examples not illustrated in FIG. 4, proof mass 112, first resonator 120, and second resonator 130 are not connected to a resonator connection structure. In some such examples, proof mass 112, first resonator 120, and second resonator 130 are connected to a substrate. For example, hinge flexure 114 may fix proof mass 112 to the substrate such that proof mass 112 may pivot about hinge flexure 114, exerting tension forces and/or compression forces on first resonator 120 and second resonator 130.

Although accelerometer system 100 is described as having two resonators, in other examples not illustrated in FIG. 1, an accelerometer system may include less than two resonators or greater than two resonators. For example, an accelerometer system may include one resonator. Another accelerometer system may include four resonators.

In one or more examples, the accelerometers described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors within the accelerometer or communicatively coupled to the accelerometer. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

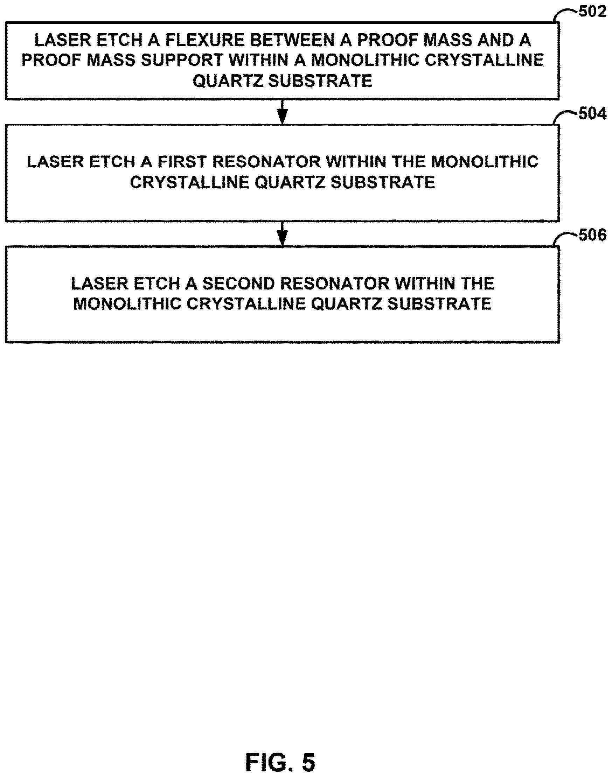

FIG. 5 is a flow diagram illustrating an example technique of making a proof mass assembly. FIG. 5 is described with respect to proof mass assembly 10 of FIGS. 1A and 1B and proof mass assembly 50 of FIG. 3. However, the techniques of FIG. 5 may utilized to make different proof mass assemblies and/or additional or alternative accelerometer systems.

A manufacturer laser selective etches flexure 16a and/or 16b within a monolithic crystalline quartz substrate between proof mass 12 and proof mass 14 (502). According to the invention, the manufacturer laser selective etches proof mass 12, proof mass support 14, and flexure 16a and/or 16b connecting proof mass 12 and proof mass support 14 from the monolithic crystalline quartz substrate, e.g., without using bonding agents, other materials, or an adhesive such as an epoxy material. In some examples, proof mass 12, proof mass support 14, and flexure 16a and/or 16b have substantially the same CTE.

The manufacturer laser selective etches resonator 60a within the monolithic crystalline quartz substrate including beams and/or tines 74a, 74b connected to top surface 40 of proof mass 12 and top surface 42 of proof mass support 14 (504). For example, the manufacturer may laser selective etch pad 72b connected to and/or integral with proof mass 12 at top surface 40 and pad 72a connected to and/or integral with proof mass support 14 at top surface 42, and laser selective etch tines 74a, 74b connected to and/or integral with pads 74a and 74b.

The manufacturer laser selective etches resonator 60b within the monolithic crystalline quartz substrate including beams and/or tines 78a, 78b connected to bottom surface 44 of proof mass 12 and bottom surface 46 of proof mass support 14 (506). For example, the manufacturer may laser selective etch pad 76b connected to and/or integral with proof mass 12 at bottom surface 44 and pad 76a connected to and/or integral with proof mass support 14 at bottom surface 46, and laser selective etch tines 78a, 78b connected to and/or integral with pads 76a and 76b.

According to the invention, the manufacturer laser selective etches material of the monolithic crystalline quartz substrate at one or more depths below a surface of the monolithic crystallin quartz substrate. For example, a crystalline quartz substrate may have a depth, e.g., a length in the depth direction (z-direction of FIG. 3), that is at least D2, and the manufacturer may laser selective etch material of the crystalline quartz substrate "beneath" top surface 80 and/or "above" bottom surface 82, e.g., a distance within the bulk of the crystalline quartz substrate from top surface 80 and/or bottom surface 82. For example, the manufacturer may laser selective etch material between top surface 40 of proof mass 12 and surface 84 of dampening plate 56a, e.g., by irradiating material of the crystalline quartz substrate corresponding to the gap between surfaces 40 and 84 through material of the crystalline quartz substrate, for example, through dampening plate 56a and without etching the material of dampening plate 56a. Similarly, the manufacturer may laser selective etch material between bottom surface 44 of proof mass 12 and surface 86 of dampening plate 56b, e.g., by irradiating material of the crystalline quartz substrate corresponding to the gap between surfaces 44 and 86 through material of the crystalline quartz substrate, for example, through dampening plate 56b and without etching the material of dampening plate 56b. As another example, the manufacturer may laser selective etch beam and/or tine 74b by laser selective etching material between top surface 90 tine 74b and top surface 40 of proof mass 12 and top surface 42 of proof mass support 14, e.g., by irradiating material of the crystalline quartz substrate corresponding to the gap between surface 90 and surfaces 40, 42 through material of the crystalline quartz substrate, for example, through tine 74b and at a depth "below" and/or within the crystalline quartz substrate from surface 90 without etching the material of tine 74b. In other words, the manufacturer may form 3D structures, e.g., proof mass 12, proof mass support 14, flexures 16a, 16b, resonators 20a, 20b, 60a, 60b, strain isolators 24a, 24b, one or more thermal isolators 26, or any other suitable proof mass assembly component, monolithically from a single part, substrate, blank, etc., of material, such as a single crystalline quartz substrate. The proof mass assembly and each of its components may then have substantially the same CTE. In some examples, the manufacturer may form such 3D structures using a laser selective etch.

In some examples, the manufacturer may form the components of a proof mass assembly, e.g., proof mass 12, proof mass support 14, flexures 16a, 16b, resonators 20a, 20b, 60a, 60b, strain isolators 24a, 24b, one or more thermal isolators 26, or any other suitable proof mass assembly component, of proof mass assembly 10 and/or 50, from the same material and having substantially the same CTE, and then connect and/or attach one or more of the components together without using bonding agents, other materials, or an adhesive such as an epoxy material. For example, the manufacturer may laser weld one or more of the proof mass assembly components via a laser selective weld, e.g., via welding portions of material within the depth of the proof mass assembly and/or welding surfaces of components through the material of the components. For example, the manufacturer may laser selective weld a surface of pad 72b to top surface 40 of proof mass 12 through the material of pad 72b, e.g., the manufacturer may focus femtosecond laser radiation at depth corresponding to the "bottom" surface of pad 72b and top surface 40 through pad 72b. By doing so, the manufacturer may alter the material of pad 72b and proof mass 12 in the volume of the focused radiation, e.g., the weld spot volume, so as to fuse the material of the different components, and may not alter material of pad 72b and proof mass 12 that is not within the volume of the focused radiation and/or weld spot volume. For example, the material of pad 72b and/or proof mass 12 may be substantially transparent to the laser radiation of the selective laser weld, and the focal volume and/or weld spot volume may have a sufficient energy density to alter the material of one or both of pad 72b and/or proof mass 12. Other components of the proof mass assembly may be similarly connected and/or attached.

## Claims

1. A proof mass assembly (10, 50, 110) comprising a monolithic crystalline quartz substrate, the monolithic crystalline quartz substrate comprising:
a proof mass (12, 112);
a proof mass support (14);
a flexure (16, 16a, 16b) connecting the proof mass (12, 112) to the proof mass support (14), wherein the proof mass (12, 112) is configured to rotate relative to the proof mass support (14) via the flexure (16, 16a, 16b);
a first resonator (60a, 120) connected to a first major surface (40) of the proof mass (12, 112) and a first major surface (42) of the proof mass support (14); and
a second resonator (60b, 130) connected to a second major surface (44) of the proof mass (12, 112) and a second major surface (46) of the proof mass support (14),
wherein the flexure (16, 16a, 16b), the first resonator (60a, 120) and the second resonator (60b, 130) are formed via a laser selective etch, the laser selective etch being configured to etch material of the monolithic crystalline quartz substrate at a depth below a surface of the monolithic crystalline quartz substrate.

2. The proof mass assembly (10, 50, 110) of claim 1, wherein the first major surface (40) of the proof mass (12, 112) is opposite the second major surface (44) of the proof mass (12, 112), wherein the first major surface (42) of the proof mass support (14) is opposite the second major surface (46) of the proof mass support (14).

3. The proof mass assembly of claim 1 or claim 2, wherein the proof mass (12, 112) and the proof mass support (14) are formed via the laser selective etch.

4. The proof mass assembly (10, 50, 110) of any one of claims 1-3, wherein the first resonator (60a, 120) and the second resonator (60b, 130) are not coplanar.

5. The proof mass assembly (10, 50, 110) of any one of claims 1-4, wherein the first resonator (60a, 120) is configured to have a compressive force and the second resonator (60b, 130) is configured to have a tensile force upon rotation of the proof mass (12, 112) in a first direction.

6. The proof mass assembly (10, 50, 110) of any one of claims 1-5, wherein the monolithic crystalline quartz substrate further comprises:
a strain isolator (24a, 24b) connected to the proof mass support (14) and configured to reduce a force of at least one of the proof mass (12, 112), the proof mass support (14), the flexure (16, 16a, 16b), the first resonator (60a, 120), or the second resonator (60b, 130) upon application of the force to the proof mass assembly (10, 50, 110).

7. The proof mass assembly (10, 50, 110) of any one of claims 1-6, wherein the monolithic crystalline quartz substrate further comprises:
a dampening plate (56, 56a, 56b) connected to the proof mass support (14) and configured to limit a range of rotation of the proof mass (12, 112).

8. A method including:
laser etching (502) a flexure (16, 16a, 16b) within a monolithic crystalline quartz substrate, wherein the flexure connects a first portion of the substrate to a second portion of the substrate, wherein the first portion of the substrate is a proof mass support (14), wherein the second portion of the substrate is a proof mass (12, 112);
laser etching (504) a first resonator (60a, 120) within the monolithic crystalline quartz substrate, wherein the first resonator (60a, 120) comprises a beam connected to a first major surface (40) of the proof mass (12, 112) and a first major surface (42) of the proof mass support (14); and
laser etching (506) a second resonator (60b, 130) within the monolithic crystalline quartz substrate, wherein the second resonator (60b, 130) comprises a beam connected to a second major surface (44) of the proof mass (12, 112) and a second major surface (46) of the proof mass support (14),
wherein the laser etching is a selective laser etch configured to etch material of the monolithic crystalline quartz substrate at a depth below a surface of the monolithic crystalline quartz substrate.

9. The method of claim 8, further including laser etching the proof mass and the proof mass support within the monolithic crystalline quartz substrate.

## Patentansprüche

1. Prüfmassenanordnung (10, 50, 110), die ein monolithisches kristallines Quarzsubstrat umfasst, das monolithische kristalline Quarzsubstrat umfassend:
eine Prüfmasse (12, 112);
einen Prüfmassenträger (14);
ein Biegeelement (16, 16a, 16b), das die Prüfmasse (12, 112) mit dem Prüfmassenträger (14) verbindet, wobei die Prüfmasse (12, 112) dazu konfiguriert ist, sich über das Biegeelement (16, 16a, 16b) relativ zu dem Prüfmassenträger (14) zu drehen;
einen ersten Resonator (60a, 120), der mit einer ersten Hauptfläche (40) der Prüfmasse (12, 112) und einer ersten Hauptfläche (42) des Prüfmassenträgers (14) verbunden ist; und
einen zweiten Resonator (60b, 130), der mit einer zweiten Hauptfläche (44) der Prüfmasse (12, 112) und einer zweiten Hauptfläche (46) des Prüfmassenträgers (14) verbunden ist;
wobei das Biegeelement (16, 16a, 16b), der erste Resonator (60a, 120) und der zweite Resonator (60b, 130) über ein selektives Laser-Ätzverfahren ausgebildet sind, wobei das selektive Laser-Ätzverfahren dazu konfiguriert ist, Material des monolithischen kristallinen Quarzsubstrats in einer Tiefe unter einer Oberfläche des monolithischen kristallinen Quarzsubstrats wegzuätzen.

2. Prüfmassenanordnung (10, 50, 110) nach Anspruch 1, wobei die erste Hauptfläche (40) der Prüfmasse (12, 112) gegenüber der zweiten Hauptfläche (44) der Prüfmasse (12, 112) ist, wobei die erste Hauptfläche (42) des Prüfmassenträgers (14) gegenüber der zweiten Hauptfläche (46) des Prüfmassenträgers (14) ist.

3. Prüfmassenanordnung nach Anspruch 1 oder 2, wobei die Prüfmasse (12, 112) und der Prüfmassenträger (14) über das selektive Laser-Ätzverfahren ausgebildet sind.

4. Prüfmassenanordnung (10, 50, 110) nach einem der Ansprüche 1-3, wobei der erste Resonator (60a, 120) und der zweite Resonator (60b, 130) nicht koplanar sind.

5. Prüfmassenanordnung (10, 50, 110) nach einem der Ansprüche 1-4, wobei bei einer Drehung der Prüfmasse (12, 112) in eine erste Richtung der erste Resonator (60a, 120) dazu konfiguriert ist, eine Druckkraft aufzuweisen, und der zweite Resonator (60b, 130) dazu konfiguriert ist, eine Zugkraft aufzuweisen.

6. Prüfmassenanordnung (10, 50, 110) nach einem der Ansprüche 1-5, wobei das monolithische kristalline Quarzsubstrat ferner Folgendes umfasst:
einen Belastungsisolator (24a, 24b), der mit dem Prüfmassenträger (14) verbunden und dazu konfiguriert ist, bei Anwenden der Kraft auf die Prüfmassenanordnung (10, 50, 110) eine Kraft von mindestens einem aus der Prüfmasse (12, 112), dem Prüfmassenträger (14), dem Biegeelement (16, 16a, 16b), dem ersten Resonator (60a, 120) oder dem zweiten Resonator (60b, 130) zu reduzieren.

7. Prüfmassenanordnung (10, 50, 110) nach einem der Ansprüche 1-6, wobei das monolithische kristalline Quarzsubstrat ferner Folgendes umfasst:
eine Dämpfungsplatte (56, 56a, 56b), die mit dem Prüfmassenträger (14) verbunden und dazu konfiguriert ist, einen Drehbereich der Prüfmasse (12, 112) zu reduzieren.

8. Verfahren, beinhaltend:
Laser-Ätzen (502) eines Biegeelements (16, 16a, 16b) innerhalb eines monolithischen, kristallinen Quarzsubstrats, wobei das Biegeelement einen ersten Abschnitt des Substrats mit einem zweiten Abschnitt des Substrats verbindet, wobei der erste Abschnitt des Substrats ein Prüfmassenträger (14) ist, wobei der zweite Abschnitt des Substrats eine Prüfmasse (12, 112) ist;
Laser-Ätzen (504) eines ersten Resonators (60a, 120) innerhalb des monolithischen, kristallinen Quarzsubstrats, wobei der erste Resonator (60a, 120) einen Strahl umfasst, der mit einer ersten Hauptfläche (40) der Prüfmasse (12, 112) und einer ersten Hauptfläche (42) des Prüfmassenträgers (14) verbunden ist; und
Laser-Ätzen (506) eines zweiten Resonators (60b, 130) innerhalb des monolithischen, kristallinen Quarzsubstrats, wobei der zweite Resonator (60b, 130) einen Strahl umfasst, der mit einer zweiten Hauptfläche (44) der Prüfmasse (12, 112) und einer zweiten Hauptfläche (46) des Prüfmassenträgers (14) verbunden ist,
wobei das Laser-Ätzen ein selektives Laser-Ätzverfahren ist, das dazu konfiguriert ist, Material des monolithischen kristallinen Quarzsubstrats in einer Tiefe unter einer Oberfläche des monolithischen kristallinen Quarzsubstrats wegzuätzen.

9. Verfahren nach Anspruch 8, ferner beinhaltend das Laser-Ätzen der Prüfmasse und des Prüfmassenträgers innerhalb des monolithischen kristallinen Quarzsubstrats.

## Revendications

1. Ensemble masse d'épreuve (10, 50, 110) comprenant un substrat monolithique de quartz cristallin, le substrat monolithique de quartz cristallin comprenant :
une masse d'épreuve (12, 112) ;
un support de masse d'épreuve (14) ;
un élément de flexion (16, 16a, 16b) reliant la masse d'épreuve (12, 112) au support de masse d'épreuve (14), dans lequel la masse d'épreuve (12, 112) est configurée pour tourner par rapport au support de masse d'épreuve (14) via l'élément de flexion (16, 16a, 16b) ;
un premier résonateur (60a, 120) relié à une première surface principale (40) de la masse d'épreuve (12, 112) et à une première surface principale (42) du support de masse d'épreuve (14) ; et
un deuxième résonateur (60b, 130) relié à une deuxième surface principale (44) de la masse d'épreuve (12, 112) et à une deuxième surface principale (46) du support de masse d'épreuve (14),
dans lequel l'élément de flexion (16, 16a, 16b), le premier résonateur (60a, 120) et le deuxième résonateur (60b, 130) sont formés via une gravure sélective au laser, la gravure sélective au laser étant configurée pour graver le matériau du substrat monolithique de quartz cristallin à une profondeur sous une surface du substrat monolithique de quartz cristallin.

2. Ensemble masse d'épreuve (10, 50, 110) selon la revendication 1, dans lequel la première surface principale (40) de la masse d'épreuve (12, 112) est opposée à la deuxième surface principale (44) de la masse d'épreuve (12, 112), dans lequel la première surface principale (42) du support de masse d'épreuve (14) est opposée à la deuxième surface principale (46) du support de masse d'épreuve (14).

3. Ensemble masse d'épreuve selon la revendication 1 ou la revendication 2, dans lequel la masse d'épreuve (12, 112) et le support de masse d'épreuve (14) sont formés via la gravure sélective au laser.

4. Ensemble masse d'épreuve (10, 50, 110) selon l'une quelconque des revendications 1-3, dans lequel le premier résonateur (60a, 120) et le deuxième résonateur (60b, 130) ne sont pas coplanaires.

5. Ensemble masse d'épreuve (10, 50, 110) selon l'une quelconque des revendication 1-4, dans lequel le premier résonateur (60a, 120) est configuré pour présenter une force de compression et le deuxième résonateur (60b, 130) est configuré pour présenter une force de traction lors de la rotation de la masse d'épreuve (12, 112) dans une première direction.

6. Ensemble masse d'épreuve (10, 50, 110) selon l'une quelconque des revendications 1-5, dans lequel le substrat monolithique de quartz cristallin comprend en outre :
un isolateur de contrainte (24a, 24b) relié au support de masse d'épreuve (14) et configuré pour réduire une force d'au moins une masse d'épreuve (12, 112), du support de masse d'épreuve (14), de l'élément de flexion (16, 16a, 16b), du premier résonateur (60a, 120), ou du deuxième résonateur (60b, 130) lors de l'application d'une force sur l'ensemble masse d'épreuve (10, 50, 110).

7. Ensemble masse d'épreuve (10, 50, 110) selon l'une quelconque des revendications 1-6, dans lequel le substrat monolithique de quartz cristallin comprend en outre :
une plaque d'amortissement (56, 56a, 56b) reliée au support de masse d'épreuve (14) et configurée pour limiter une plage de rotation de la masse d'épreuve (12, 112).

8. Procédé incluant :
la gravure au laser (502) d'un élément de flexion (16, 16a, 16b) à l'intérieur d'un substrat monolithique de quartz cristallin, dans lequel l'élément de flexion relie une première partie du substrat à une deuxième partie du substrat, dans lequel la première partie du substrat est un support de masse d'épreuve (14), dans lequel la deuxième partie du substrat est une masse d'épreuve (12, 112) ;
la gravure au laser (504) d'un premier résonateur (60a, 120) à l'intérieur du substrat monolithique de quartz cristallin, dans lequel le premier résonateur (60a, 120) comprend un faisceau relié à une première surface principale (40) de la masse d'épreuve (12, 112) et une première surface principale (42) du support de masse d'épreuve (14) ; et
la gravure au laser (506) d'un deuxième résonateur (60b, 130) à l'intérieur du substrat monolithique de quartz cristallin, dans lequel le deuxième résonateur (60b, 130) comprend un faisceau relié à une deuxième surface principale (44) de la masse d'épreuve (12, 112) et une deuxième surface principale (46) du support de masse d'épreuve (14),
dans lequel la gravure au laser est une gravure sélective au laser configurée pour graver le matériau du substrat monolithique de quartz cristallin à une profondeur sous une surface du substrat monolithique de quartz cristallin.

9. Procédé selon la revendication 8, incluant en outre la gravure au laser de la masse d'épreuve et du support de masse d'épreuve à l'intérieur du substrat monolithique de quartz cristallin.
